# EUROPEAN PATENT SPECIFICATION

(11) **EP 2 648 315 B1**
(45) Date of publication and mention of the grant of the patent: **27.06.2018**
(21) Application number: 11861157.3
(22) Date of filing: 11.03.2011
(51) Int. Cl.: H02J 50/10

(54) **WIRELESS POWER SUPPLY DEVICE AND METHOD**
DRAHTLOSE STROMVERSORGUNGSVORRICHTUNG UND VERFAHREN DAFÜR
DISPOSITIF ET PROCÉDÉ D'ALIMENTATION ÉLECTRIQUE SANS FIL

(43) Date of publication of application: 09.10.2013
(73) Proprietor: Haier Group Corporation, Qingdao, Shandong 266101 (CN); Haier Group Technology R&D Center, Qingdao, Shandong 266101 (CN)
(72) Inventor: LI, Dan, Qingdao Shandong 266101 (CN); DANG, Yangtao, Qingdao Shandong 266101 (CN); SUN, Hui, Qingdao Shandong 266101 (CN); DIAO, Depeng, Qingdao Shandong 266101 (CN); HUANG, Xuetao, Qingdao Shandong 266101 (CN); LIU, Bao, Qingdao Shandong 266101 (CN)
(74) Representative: Ziebig & Hengelhaupt Patentanwälte PartG mbB
(86) International application number: PCT/CN2011/071720
(87) International publication number: WO 2012/122695

(56) References cited:
- WO-A1-2009/147664
- CN-A- 1 835 338
- CN-A- 1 951 016
- CN-A- 101 527 372
- CN-A- 101 557 227
- US-A1- 2005 068 009
- US-A1- 2005 134 213
- US-A1- 2010 084 918
- US-A1- 2011 018 360

## Description

### Technical Field

The present invention relates to the field of electronics, and in particular, to a wireless power supplying device and method.

### Technical Background

In order to facilitate the use of an electrical apparatus by a user, a tailless product has been proposed by some manufacturers so far. The principle of the tailless product includes that: a transmitter of the product receives an external power supply (for example, the transmitter is connected to the mains supply voltage), and produce a corresponding magnetic field from an electrical signal through the electromagnetic conversion processing; and a receiver corresponding to the transmitter senses the generated magnetic field, converts the magnetic field into an electrical signal, and then provides the electrical signal to the load of the receiver.

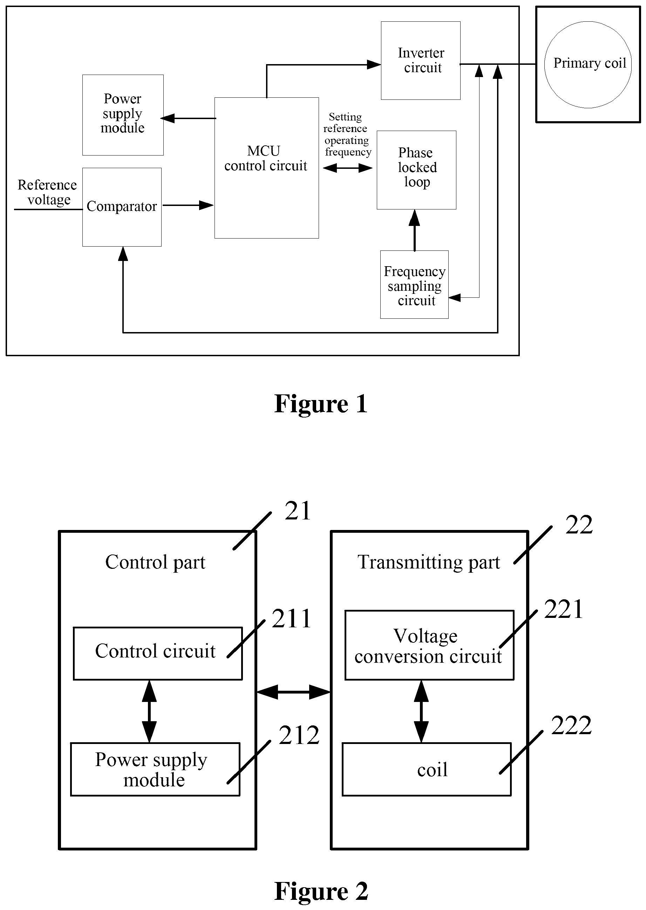

As shown in Figure 1, the transmitter of the current tailless apparatus mainly includes: a power supply module, a comparator, a Microprogrammed Control Unit (MCU) control circuit, a phase locked loop, a frequency sampling circuit, an inverter circuit, and a primary coil.

The power supply module is used to supply the power to the primary coil via the inverter circuit. The inverter circuit is used to convert the voltage of the electrical signal from the power supply module to a voltage required for the primary coil. The phase locked loop is used to enable the primary coil to operate at the desired reference operating frequency. The frequency sampling circuit is used to sample the current operating frequency of the primary coil, and notify the sampled frequency to the phase locked loop. The phase locked loop is used to enable the primary coil to operate at the preset reference operating frequency, perform frequency comparison to determine whether the current operating frequency of the coil meets requirements or not, and notify the MCU in the case that the current operating frequency does not meet requirements. The power supply module is controlled by the MCU to adjust the signal frequency. Further, the comparator is used to compare a reference voltage with the voltage outputted from the inverter circuit, in order to determine whether the control part is connected with a load, and then the MCU controls the power supply module to supply the power or stop supplying the power accordingly.

As can be seen in the current tailless product, one transmitter corresponds to one transmitting antenna, which can produce merely one type of the magnetic field. If a user wishes to supply power for a plurality of different receivers through a plurality of transmitting antennas at the same time, it is necessary to provide transmitters as many as the transmitting antennas. Further, parameters (such as the frequency) of the electromagnetic induction generated by the transmitting antenna of each transmitter are fixed, and the magnetic field can be received by only the antenna of the receiver in pairs with the transmitter.

In the case that the power corresponding to the electromagnetic induction generated by the antenna coil of the transmitter is 200W and the receiver A corresponding to the transmitter is a TV set with power of 200W, and the operating frequency of the transmitter is same or similar as that of the receiver, the transmitter can supply the power to the receiver A, allowing the TV set to operate properly. However, for a tailless computer with power of 100W, it cannot receive the power supplied from the transmitter due to the mismatch of power. Therefore, if the user wishes to use the above tailless TV set and the tailless computer, it is needed to purchase the transmitters respectively corresponding to the computer and the TV set. Thus, both the space occupied by the transmitters and the user's expenditure will increase. Further, since the user needs to arrange a plurality of transmitters, the difficulty of installation and deployment of the apparatus is increased, and it is inconvenient for the user to use the apparatus.

The solution of supplying power to a plurality of receivers in a wireless manner in the related technologies is defective, because excessive space is occupied by a plurality of transmitters that are required, the user's expenditure is increased, and the installation, deployment and usage of the apparatus are inconvenient. However, an effective solution has not been proposed to overcome the above defects.

In US 2011/018360 A1, a universal power supply for wired and wireless electronic devices is provided. Also, a universal power supply that is reconfigurable to provide a wide range of power supply options is provided.

In US 2005/134213 A1, a contactless power transmitting device includes a power transmitting device functioning as a charger, a power transmitting-receiving sharing device functioning as a charger and including a secondary battery, and a power receiving device including a secondary battery. The power transmitting-receiving sharing device is used as a power supply for portable computers. The power receiving device is used as a power supply for cellular phones. The power transmitting device forms a contactless power transmitting device respectively by electromagnetically coupling to either the power transmitting-receiving sharing device or the power receiving device to charge the secondary battery or the secondary battery. The power transmitting-receiving sharing device forms the contactless power transmitting device by electromagnetically coupling to the power receiving device.; In this case, the power transmitting-receiving sharing device charges the secondary battery included in the power receiving device.

### Summary of the Invention

In view of the problems in the related arts that excessive space is occupied by the transmitters of the wireless power supplying apparatus, the user's expenditure is increased, and the installation, deployment and usage thereof are inconvenient, the present invention proposes a wireless power supplying device and method, which can effectively reduce the number of the transmitters, and supply power to one receiver or more different receivers by means of the same transmitter, thereby reducing the space occupied by the transmitters and the expenditure for purchasing the transmitters, and facilitating the user's installation, deployment and usage of the apparatus.

The technical solution of the present invention is as follows.

According to an aspect of the present invention, there is provided a wireless power supplying device for supplying power to a receiver having a magneto-electric conversion function by means of electromagnetic induction.

The wireless power supplying device according to the present invention comprises the features of claim 1.

Furthermore, each transmitting part may further include: a trigger, which is used for sending a trigger signal identifying the transmitting part including the trigger to the control circuit after the transmitting part is connected to the control part.

Furthermore, the control part may further include: a storage module, for storing the power requirement corresponding to each transmitting part.

Furthermore, the control circuit is further used to receive the trigger signal, recognize the transmitting part connected to the control part according to the received trigger signal, and determine the power requirement of the recognized transmitting part according to contents stored in the storage module.

Furthermore, after a transmitting part is connected to the control part, the trigger of the transmitting part is connected to the control circuit via a first signal line and a second signal line, and the trigger identifies the transmitting part by controlling the levels of the trigger signals transmitted on the first and second signal lines.

Furthermore, each transmitting part may further include: a frequency sampling circuit for sampling the current operating frequency of the transmitting part including the frequency sampling circuit after the transmitting part is connected to the control part; a phase locked loop, which is connected to the frequency sampling circuit, is used for acquiring the frequency sampled by the frequency sampling circuit, and comparing the acquired frequency with the reference frequency, and if the sampled frequency is not matched with the reference frequency, the phase locked loop notifies the comparison result to the control part.

Furthermore, the control part may further include: a storage module for storing the operating frequency requirement corresponding to each transmitting part; furthermore, the control circuit is also used to control the power supply module to adjust the frequency of the sent electrical signal according to the comparison result from the phase locked loop.

The device may further include: a comparator comprising a first port used to receive a predetermined reference voltage and a second port; and the number of the second ports is the same as that of the transmitting parts allowed to be connected to the control part. In the case of the connection of one transmitting part to the control part, the second port receives the voltage outputted from the voltage conversion circuit of the transmitting part.

The comparator is used to compare the voltage at the first port with the voltage at the second port, and notify the comparison result to the control circuit, so that the control circuit can determine whether the control part is connected with the transmitting part according to the comparison result, and control the power supplying of the power supply module.

Preferably, each transmitting part may be connected to the control part in a removable manner through a predetermined standard interface.

Optionally, each transmitting part may include: a voltage conversion circuit for receiving the electrical signal sent by the power supply module, and performing voltage conversion on the received electrical signal based on the voltage requirement of the coil of the transmitting part; and a coil for generating a magnetic field by using the electrical signal from the voltage conversion circuit of the transmitting part including the coil, to supply power to the load of the receiver.

Preferably, the voltage conversion circuit in the transmitting part is an inverter circuit.

According to another aspect of the present invention, there is provided a wireless power supplying method for supplying power to a receiver having a magneto-electric conversion function by means of electromagnetic induction.

The wireless power supplying method according to the present invention includes: the features of claim 7.

The determining the power requirement of the connected transmitting part by the control circuit includes:

receiving, by the control circuit, a trigger signal for identifying the transmitting part sent by a trigger of the transmitting part; and recognizing, by the control part, the transmitting part connected to the control part according to the received trigger signal, and determining the power requirement of the recognized transmitting part according to contents stored in a storage module of the control part, where the storage module is used to store the power requirement corresponding to each transmitting part.

Further, after the connection of a transmitting part to the control part, the trigger of the transmitting part is connected to the control circuit via a first signal line and a second signal line, and the trigger is used to identify the transmitting part by controlling the levels of the trigger signals transmitted on the first signal line and the second signal line.

In addition, after the connection of the control part to the transmitting part, the wireless power supplying method further includes: receiving, by a phase locked loop of the connected transmitting part, the current operating frequency of the transmitting part sampled by a frequency sampling circuit of the transmitting part; comparing, by the phase locked loop, the sampled current operating frequency with a predetermined reference frequency of the transmitting part, and if the sampled current operating frequency is not matched with the reference frequency, the phase locked loop notifies the comparison result to the control circuit of the control part; and controlling, by the control circuit, the power supply module to adjust the frequency of the sent electrical signal based on the comparison result from the phase locked loop.

The method may further include: receiving a predetermined reference voltage by a first port of a comparator of the control part, and receiving, by a second port of the comparator, the voltage outputted from a voltage conversion circuit of the transmitting part connected to the control part; comparing the voltage at the first port with the voltage at the second port by the comparator; and determining, by the control circuit, whether the control part is connected with the transmitting part based on the comparison result from the comparer, and controlling the power supplying of the power supply module.

Optionally, the controlling by the control circuit the power supply module in the control part to send the electrical signal satisfying the power requirement to the transmitting part, and generating the magnetic field based on the electrical signal by the transmitting part to supply power to the load of the receiver may include: controlling, by the control circuit, the power supply module in the control part to send the electrical signal satisfying the power requirement to the voltage conversion circuit of the transmitting part; receiving, by the voltage conversion circuit, the electrical signal sent by the power supply module, performing the voltage conversion on the received electrical signal based on the voltage requirement of the transmitting part, and providing the converted electrical signal to the coil of the transmitting part; and generating the magnetic field by the coil using the electrical signal converted by the voltage conversion circuit, and supplying power to the load of the receiver by means of the magnetic field. Preferably, the voltage conversion circuit of the transmitting part may be an inverter circuit.

In the invention, the control circuit can determine the power required by at least one transmitting part connected to the control part and individually supply power to the coil of each connected transmitting part based on the determination result, thereby enabling the coil to generate the electromagnetic induction (i.e. a magnetic field) with the desired power, and supplying reasonably power to the receivers and allowing each receiver to operate properly. Since it is unnecessary to provide a plurality of transmitters, instead, the transmitting part(s) corresponding to one or more receivers expected by the user is needed to be connected to the same control part to implement the wireless power supplying, therefore, it is possible to reduce the number and complexity of the transmitting parts, and simplify the installation, deployment and usage of the apparatus.

### Description of Drawings

Figure 1 is a schematic diagram showing the structure of a transmitter of a wirelessly power supplying device in the related art;
Figure 2 is a block diagram of a wireless power supplying device according to an embodiment of the present invention;
Figure 3 is a schematic structural diagram showing the connection of a wireless power supplying device with a plurality of transmitting parts according to an embodiment of the present invention;
Figure 4 is an internal processing flowchart of the wireless power supplying device according to an embodiment of the invention when a control part is connected to a transmitting part in the device; and
Figure 5 is a flowchart of a wireless power supplying method according to an embodiment of the invention.

### Detailed description of the Preferred Embodiment

In view of problems in the related art that excessive space is occupied by the transmitters of the wireless power supplying device, the user's expenditure is increased, and the installation, deployment and usage of the device are inconvenient, the present invention proposes an architecture in which a control part and a transmitting part are separated, so that a control circuit can determine the power required for at least one transmitting part connected to the control part and individually supply power to the coil of each connected transmitting part, thereby enabling each coil to generate electromagnetic induction with the desired power, and achieving the reasonable power supplying to each receiver and allowing the receiver to operate properly.

A specific implementation of the present invention will be described in detail below in conjunction with the accompanying drawings.

According to an embodiment of the present invention, there is provided a wireless power supplying device for supplying power to a receiver having the magneto-electric conversion function by means of electromagnetic induction.

As shown in Figure 2, the wireless power supplying device according to an embodiment of the present invention includes: a control part 21 and at least one transmitting part 22 connected thereto, where the control part includes a control circuit 211 and a power supply module 212 which are connected, and the transmitting part 22 includes an unit which can generate a magnetic field based on an electrical signal and supply power to the load of the receiver, for example as shown in Figure 1, the transmitting part 22 includes a voltage conversion circuit 221 and a coil 222 which are connected; in addition to the structure of the transmitting part shown in Figure 1, the transmitting part may be formed by a variety of other ways, for example, components of the transmitting part can be replaced, added, deleted, or integrated, and the specific construction is not further described herein.

Further, each transmitting part is connected to the control part in a pluggable manner, by means of a predefined interface between the transmitting part and the control part (after the connection of one transmitting part to the control part, the power supply module 212 can supply power to the coil through the voltage conversion circuit of the transmitting part).

The control circuit 211 is used to determine the power requirement of each transmitting part 22 connected thereto (which is usually a range of power values), and control the power module 212 to send an electrical signal satisfying the power requirement to the voltage conversion circuit 221 of the transmitting part 22.

The voltage conversion circuit 221 in the transmitting part 22 connected to the control part (which may be an inverter circuit, for example) is used to receive the electrical signal sent by the power supply module 212, perform voltage conversion on the received electrical signal based on the voltage requirement of the coil 222 of the transmitting part 22, and provide the electrical signal subjected to the conversion to the coil 222 of the transmitting part 22.

The coil 222 in each transmitting part 22 connected to the control part 21 is used to generate a magnetic field using the electrical signal from the voltage conversion circuit of the transmitting part 22 including the coil 222, to supply power to the load of the receiver.

By means of the above processing, the control circuit can determine the power required for at least one transmitting part connected to the control part, and individually supply power to the coil of each connected transmitting part based on the determination result, so that each coil can generate the electromagnetic induction (i.e. a magnetic field) with the desired power, thereby reasonably supplying power to the receiver and allowing each receiver to operate properly. Since it is unnecessary to provide a plurality of the control parts, instead, the transmitting part(s) corresponding to one or more receivers expected by the user is needed to be connected to the same control part to implement the wireless power supplying. Therefore, it is possible to reduce the number and complexity of the control parts, and simplify the installation, deployment and usage of the apparatus.

In order to ensure the accurate recognition of the transmitting part by the control part, the transmitting part further includes: a trigger (not shown), which is used to transmit a trigger signal for identifying the transmitting part including the trigger to the control circuit 211, after the connection of the transmitting part to the control part.

Further, the control part 21 further includes: a storage module (not shown), for storing the power requirement corresponding to each transmitting part.

In this case, the control circuit 211 may be further used to receive the trigger signal from the trigger, recognize the transmitting part 22 connected to the control part 21 based on the received trigger signal, and determine the power requirement of the transmitting part 22 based on contents stored in the storage module.

Preferably, after the connection of the control part with any transmitting part, the trigger of the transmitting part is connected to the control circuit via a first signal line (hereinafter referred to as a signal line 1) and a second signal line (hereinafter referred to as a signal line 2), and the trigger identifies the transmitting part by controlling the level of the trigger signal transmitted over the first signal line and the second signal line.

For example, for a transmitting part A requiring for power of 100W, it is possible to pre-configure the transmitting part A so that it is identified by low levels of both the signal lines 1 and 2, also, the control circuit should record the identification of the transmitting part A by low levels of both the signal lines 1 and 2, and record the power of 100W as the requirement for the transmitting part A.

Thus, when the transmitting part A is connected to the control part, the transmitting part A receives the power supplied from the power supply module and is powered-on, and the trigger will set the signal lines 1 and 2 as low levels, then, the control circuit can recognize that the transmitting part A is connected currently, and control the power supply module to supply power to the coil of the transmitting part A according to the power requirement of the transmitting part A stored in the storage module.

However, a transmitting part B may be pre-configured to be identified by a low level of the signal line 1 and a high level of the signal line 2, so that the control circuit can recognize the transmitting part B accurately. Likewise, more transmitting parts can be identified by different combinations of high and low levels.

In addition to the identification of each transmitting part by the two signal lines, levels of more signal lines can also be used to identify more transmitting parts; further, in addition to the identification of each transmitting part by the high and low levels, the transmitting part can notify its own identity to the control circuit by signaling transmission or other ways, the specific implementation of which is not illustrated herein.

Further, in order to ensure that the coil of the transmitting part can be operated at the desired frequency (that is, each coil is pre-configured with the corresponding reference frequency), each transmitting part may further include:
a frequency sampling circuit (not shown), which is used to sample the current operating frequency of the transmitting part including the frequency sampling circuit, after the connection of the transmitting part to the control part; and
a phase locked loop (not shown), which may be connected to the frequency sampling circuit; after the connection of the transmitting part including the phase locked loop to the control part, the phase locked loop is connected to the control circuit of the control part, and the phase locked loop can acquire the frequency sampled by the frequency sampling circuit of the transmitting part including that phase locked loop, and compare the acquired frequency with the reference frequency; and if the acquired frequency and the reference frequency are not matched, the phase locked loop notifies the comparison result to the control part; where the phase locked loop may receive the sampling result from the frequency sampling circuit, and the sampling result is not necessarily a frequency value, but may be other parameters associated with the signal, and the phase locked loop can ultimately determine the current operating frequency of the coil of the transmitting part according to the parameters;

Further, the control part may further include:
a storage module, for storing the operating frequency requirement corresponding to each transmitting part.

Further, the control circuit is also used to control the power supply module to adjust the frequency of the sent electrical signal according to the comparison result.

The storage module can store both the operating frequency requirement corresponding to each transmitting part and the power corresponding to the transmitting part, and the storage module can record and manage the stored power and frequency (i.e., the reference frequency required for each transmitting part, which may be a frequency range) corresponding to each coil by means of a database. In practical applications, after the control part provides the signal to the transmitting part (possible via components such as a switching circuit), the deviation of the signal frequency may be likely caused. Therefore, after the above processing by the frequency sampling circuit, the phase locked loop and the control circuit, the control circuit can control the power supply module to adjust the frequency of the sent electrical signal, thereby allowing the transmitting part to be operated properly.

The device according to an embodiment of the invention may further include a comparator (not shown), which includes a first port used to receive a predetermined reference voltage and a second port; and the number of the second ports is the same as that of the transmitting parts allowed to be connected to the control part. In the case that one transmitting part is connected to the control part, the second port receives the voltage outputted from the voltage conversion circuit of the transmitting part; the comparator compares the voltage at the first port with that at the second port, and notifies the comparison result to the control circuit, to enable the control circuit to determine whether the control part is connected with the transmitting part according to the comparison result, and control the supplying of power by the power supply module. Thus, by the voltage comparison results of the comparator, it is possible to monitor in real-time whether the control part is connected with the transmitting part and whether the transmitting part is connected with the load at the receiver. If the control part is not connected with any transmitting part or the receiver corresponding to the transmitting part is turn off, the comparator notifies the control circuit of this case, and the control circuit controls the power supply module to stop supplying power; otherwise, the control circuit controls the power supply module to supply power. Thus, the timely start or stop supplying power by the power supply module can be ensured, so that the circuit components are prevented from being destroyed and the reliability of the entire device is improved.

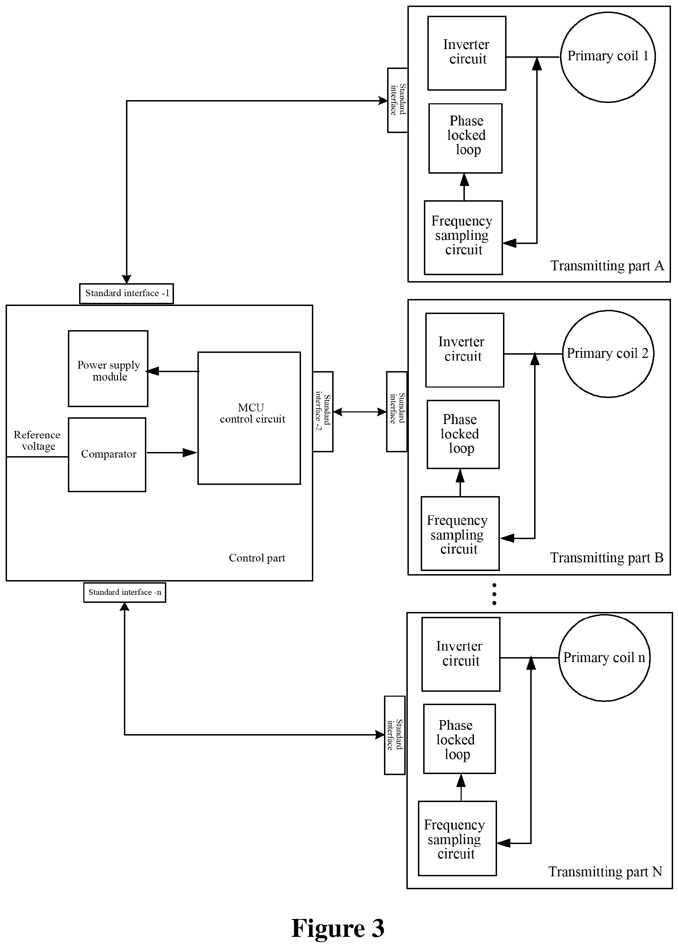

Figure 3 is a schematic diagram showing the connection of one control part to a plurality of transmitting parts.

As shown in Figure 3, the control part is connected to the transmitting part A through a standard interface 1, to the transmitting part B through a standard interface 2, ......, and to the transmitting part N through a standard interface n. Through the standard interface 1, the control part supplies power to the primary coil 1 of the transmitting part A, so that the primary coil 1 generates the electromagnetic induction for the corresponding receiver; similarly, the control part supplies power through the standard interface 2 for the transmitting part B, so that the primary coil 2 of the transmitting part B generates an electromagnetic induction, and so on. The function of the MCU control circuit shown in Figure 3 corresponds to the control circuit mentioned above. The electrical signal for supplying power to the transmitting part A and the electrical signal for supplying power to the transmitting part B are independent of each other, i.e., these two electrical signals may be the same or different. For clarity and simplicity purposes, Figure 3 shows neither the connection between the comparator and the output terminal of the inverter circuit of each transmitting part, nor the connection between the control circuit and each phase locked loop.

The standard interfaces between individual transmitting parts and the control part are defined in Table 1 as below:

**Table 1**

| supply power fire wire interface | supply power ground wire interface | isolation layer | inverter signal line | inverter signal line | phase locked loop signal line | trigger signal line | trigger signal line | frequency sampling signal line | circuit board high-voltage interface | circuit board ground wire interface |
|---|---|---|---|---|---|---|---|---|---|---|
| P1 | P2 | | P3 | P4 | P5 | P6 | P7 | P8 | P9 | P10 |

As shown in Table 1, the interfaces P1 and P2 are high-voltage power supplying interfaces through which the power can be supplied to the inverter (e.g. the coil). The isolation layer is used to separate the signal interfaces with the low-voltage power supplying interface to avoid interference generation, and the isolation layer may be a vacuum layer or a high resistance plastic layer, and is not further illustrated herein.

Further, the interfaces P3 and P4 correspond to inverter signal lines and output opposite signals; the interface P5 is a phase locked loop interface, and the fixed frequency of the transmitting coil is locked in the phase locked loop; the interfaces P6 and P7 (respectively corresponding to the above signal lines 1 and 2) are trigger interfaces on the circuit board. When the transmitting part is connected to the control part, the trigger interface is operating firstly. The trigger interface triggers the port corresponding to the MCU, and inputs the related signal, thereby reporting the sequence number (i.e. the identity of the connected transmitting part) of the connected primary coil to the MCU. The sequence number may be pre-stored in the storage module (which may be arranged in the MCU or connected to the MCU), so that the respective process (in which an electrical signal with the appropriate frequency and power is supplied to the transmitting part, for example) can be performed for the transmitting part according to the sequence number of the primary coil searched out. Further, the number of the trigger interfaces among the standard interfaces can be increased, thereby increasing the number of primary coils. The corresponding relationships between the different level combinations of the interfaces P6 and P7 and the represented transmitting parts are shown in Table 2.

**Table 2**

| P6 | P7 | sequence number | primary coil |
|---|---|---|---|
| 0 | 0 | 00 | A |
| 0 | 1 | 01 | B |
| 1 | 0 | 10 | C |
| 1 | 1 | 11 | D |

In Table 2, "0" represents a low level and "1" represents a high level.

In addition, the interface P8 is a frequency sampling interface, which is used to feed the sampled frequency points of the transmitting coil (i.e. the primary coil) back to the comparator and the MCU control circuit, for further adjusting the circuit frequency by the MCU control circuit; the interfaces P9 and P10 are power supplying interfaces on the circuit board, namely a fire wire interface and a ground line interface, respectively.

It should be noted that the order of the interfaces shown in Table 1 is just a specific example. The orders and names of the interfaces may be adjusted as desired, and it is also possible to increase or reduce the number of the interfaces.

With the above device, it is possible for the control part to make judgment according to the different power requirements of the transmitting parts, so that the desired electrical signal can be provided to each transmitting part, and plug and play of the various transmitting parts can be achieved. Further, if needed, resistive or inductive apparatuses with the same power may be placed on the same coil, and the frequency locked in the phase locked loop corresponding to the same transmitting coil is fixed.

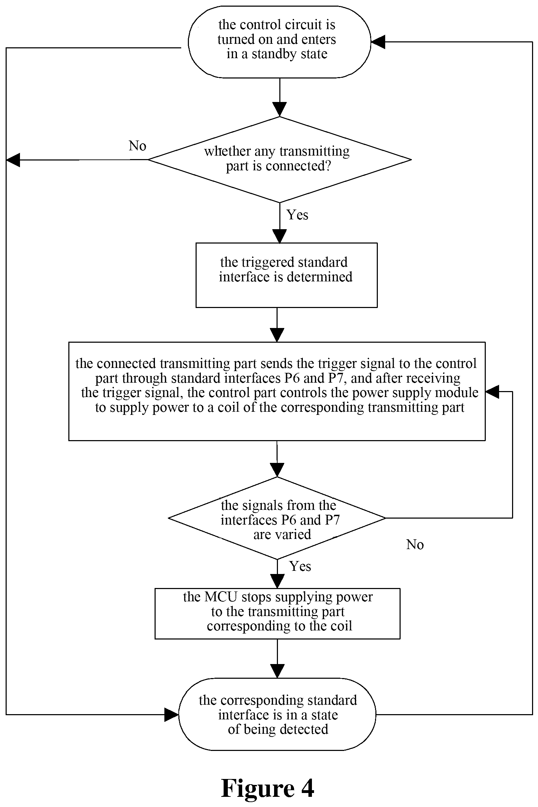

Figure 4 illustrates a flowchart of interaction between the control part and the transmitting part. Figure 4 specifically includes the following processing.

After the control circuit is turned on and in a standby state, the control circuit remains in the standby state if it is not connected to the circuit of any transmitting part, and the transmitting part is powered off.

The control part detects its various standard interfaces (e.g., the standard interface 1, the standard interface 2, ......, and the standard interface n in Figure 3) and determines whether they are connected with the transmitting parts.

If it is determined that the transmitting part is connected, it is further determined which standard interface is triggered by the transmitting part.

The connected transmitting part sends the trigger signal to the control part (particularly to the MCU control circuit) through standard interfaces P6 and P7, and the control part conducts the following processing after receiving the trigger signal:

the control circuit determines the pins of the standard interfaces that receive a trigger signal according to the signal variation of the standard interfaces P6 and P7, and initiates the frequency control on different frequencies (the range of which is the frequency requirement of the connected transmitting part) according to different trigger signals;

the power supply module is controlled to supply power to the transmitting part, to supply power to the coil of each transmitting part and enable the operating state of the coil; and

once the control circuit detected a change of the signals at the interfaces P6 and P7 of the powered transmitting part, it means that the connected transmitting part is pulled out (or abnormal), then the MCU stops supplying power to the transmitting part corresponding to the coil; and then the standard interface is in a state of being detected.

With the above device, it is possible to effectively reduce the cost of the transmitting system by multiplexing the transmitters, implement the connection between the control part and the transmitting part through the standard interfaces, and enable the transmitting part to match multiple receiving parts, thus facilitating the installation, deployment and usage of the apparatus.

According to another embodiment of the present invention, there is provided a wireless power supplying method for supplying power to a receiver having a magneto-electric conversion function by means of electromagnetic induction.

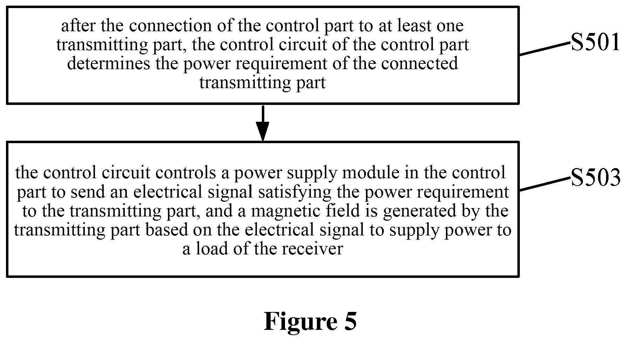

As shown in Figure 5, the wireless power supplying method according to an embodiment of the present invention includes steps S501 and S503.

At the step S501, after a control part is connected to at least one transmitting part, a control circuit of the control part determines the power requirement of the connected transmitting part.

At the step S503, the control circuit controls a power supply module in the control part to send an electrical signal satisfying the power requirement to the transmitting part, and a magnetic field is generated by the transmitting part based on the electrical signal to supply power to a load of the receiver.

When the control circuit controls the power supply module in the control part to send the electrical signal satisfying the power requirement to the transmitting part, the control circuit may control the power supply module in the control part to send the electrical signal satisfying the power requirement to the voltage conversion circuit (which may be, for example, an inverter circuit) of the transmitting part; the voltage conversion circuit receives the electrical signal sent by the power supply module, performs voltage conversion on the received electrical signal based on the voltage requirement of the transmitting part, and provides the electrical signal subjected to the voltage conversion to the coil of the transmitting part; and the coil in turn generates a magnetic field using the electrical signal converted by the voltage conversion circuit, and supplies power to the load of the receiver through the magnetic field.

When the control circuit determines the power requirement of the connected transmitting part, the control circuit may receive an trigger signal transmitted by an trigger of the transmitting part, where the trigger signal is used to identify the transmitting part.

The control part recognizes the the transmitting part connected thereto according to the received trigger signal, and determines the power requirement of the recognized transmitting part according to contents stored in the storage module of the control part, where the storage module is used to store the power requirement corresponding to each transmitting part.

Furthermore, after a transmitting part is connected to the control part, the trigger of the transmitting part is connected to the control circuit via a first signal line and a second signal line, and the trigger identifies the transmitting part by controlling the levels of the trigger signals transmitted on the first and second signal lines.

In addition, after the control part is connected to the transmitting part, the phase locked loop of the connected transmitting part receives the current operating frequency of the transmitting part sampled by the frequency sampling circuit of the transmitting part; the phase locked lock compares the current operating frequency sampled by the frequency sampling circuit of the transmitting part currently connected to the control part with the predetermined reference frequency requirement of the transmitting part stored in the storage module of the transmitting part, and if the sampled frequency is not matched with the reference frequency, then the phase locked loop notifies the comparison result to the control circuit of the control part; and the control circuit controls the power supply module to adjust the frequency of the sent electrical signal based on the comparison result from the phase locked loop.

Further, the first port of the comparator of the control part receives the predetermined reference voltage, and the second port of the comparator receives the voltage outputted from the voltage conversion circuit of the transmitting part connected to the control part; the comparator can compare the voltage at the first port with the voltage at the second port in real time (the comparison is performed regardless of whether the control part is connected to the transmitting part); the control circuit determines whether the control part is connected with the transmitting part according to the comparison result of the comparator, and controls the power supplying of the power supply module, thereby ensuring reasonable supplying of power or stopping of power supplying, so that the circuit components are prevented from being overloaded and reliability of the circuits is improved.

As described above, with the above technical solution of the present invention, the circuit can determine the power required by at least one transmitting part connected to the control part, and individually supply power for the coil of each connected transmitting part based on the determination result, thereby enabling the coil to generate the electromagnetic induction with the desired power, and achieving the reasonable power supplying to the receivers and allowing each receiver to operate properly. Since it is unnecessary to provide a plurality of transmitters, instead, the transmitting part(s) corresponding to one or more receivers expected by the user is needed to be connected to the same control part, therefore, it is possible to reduce the number and complexity of the transmitting parts, and simplify installation, deployment and usage of the apparatus.

## Claims

1. A wireless power supplying device for supplying power to a receiver having a magneto-electric conversion function by means of electromagnetic induction, comprising a control part (21) and at least one transmitting part (22) connected to the control part (21), wherein the control part (21) includes a control circuit (211) and a power supply module (212);
wherein, the control circuit (211) is used to determine a power requirement of each transmitting part (22) connected to the control part (21), and control the power supply module (212) to send an electrical signal satisfying the power requirement to the transmitting part (22), and the transmitting part (22) in turn generates a magnetic field based on the electrical signal and supplies power to a load of the receiver;
the control part (21) further comprises: a storage module, for storing the power requirement corresponding to each transmitting part (22);
the control circuit (211) is further used to determine the power requirement of the recognized transmitting part (22) according to contents stored in the storage module;
**characterized in that,**
each transmitting part (22) further comprises: a trigger, which is used for sending a trigger signal identifying the transmitting part (22) including the trigger to the control circuit (211) after the transmitting part (22) is connected to the control part (21);the control circuit (211) is further used to receive the trigger signal and to recognize the transmitting part (22) connected to the control part (21) according to the received trigger signal,
wherein, after a transmitting part (22) is connected to the control part (21), the trigger of the transmitting part (22) is connected to the control circuit (211) via a first signal line and a second signal line, and the trigger identifies the transmitting part (22) by controlling levels of the trigger signals transmitted on the first signal line and the second signal line.

2. The device of claim 1, wherein,
each transmitting part (22) further comprises: a frequency sampling circuit for sampling the current operating frequency of the transmitting part (22) including the frequency sampling circuit after the transmitting part (22) is connected to the control part (21);
a phase locked loop, which is connected to the frequency sampling circuit, is used for acquiring the frequency sampled by the frequency sampling circuit, and comparing the acquired frequency with a reference frequency, and if the sampled frequency is not matched with the reference frequency, the phase locked loop notifies the comparison result to the control part (21);
the control part (21) further comprises: a storage module for storing an operating frequency requirement corresponding to each transmitting part (22);
the control circuit (211) is also used to control the power supply module (212) to adjust the frequency of the sent electrical signal according to the comparison result from the phase locked loop.

3. The device of claim 1, further comprising:
a comparator comprising a first port used to receive a predetermined reference voltage and a second port; the number of the second ports is the same as that of the transmitting parts (22) allowed to be connected to the control part (21), and in the case that one transmitting part (22) is connected to the control part (21), the second port receives a voltage outputted from a voltage conversion circuit (221) of the transmitting part (22);
wherein the comparator is used to compare the voltage at the first port with the voltage at the second port, and notify the comparison result to the control circuit (211), so that the control circuit (211) determines whether the control part (21) is connected with the transmitting part (22) according to the comparison result, and control the power supplying of the power supply module (212).

4. The device of claim 1, wherein, each transmitting part (22) is connected to the control part (21) in a removable manner through a predetermined standard interface.

5. The device of claim 1, wherein, each transmitting part (22) comprises:
a voltage conversion circuit (221) for receiving the electrical signal sent by the power supply module (212), and performing voltage conversion on the received electrical signal based on the voltage requirement of the coil of the transmitting part (22); and
a coil for generating a magnetic field by using the electrical signal from the voltage conversion circuit (221) of the transmitting part (22) including the coil, to supply power to the load of the receiver.

6. The device of claim 5, wherein, the voltage conversion circuit (221) in the transmitting part (22) is an inverter circuit.

7. A wireless power supplying method for supplying power to a receiver having a magneto-electric conversion function by means of electromagnetic induction, comprising:
after the connection of a control part (21) to at least one transmitting part (22), determining a power requirement of the connected transmitting part (22) by a control circuit (211) of the control part (21); and
controlling, by the control circuit (211), a power supply module (212) in the control part (21) to send an electrical signal satisfying the power requirement to the transmitting part (22), which generates a magnetic field based on the electrical signal to supply power to a load of the receiver;
wherein the power requirement of the recognized transmitting part (22) is determined according to contents stored in a storage module of the control part (21), where the storage module is used to store the power requirement corresponding to each transmitting part (22),
**characterized in that**
the determining the power requirement of the connected transmitting part (22) by the control circuit (211) comprises:
receiving, by the control circuit (211), a trigger signal for identifying the transmitting part (22) sent by a trigger of the transmitting part (22); and
recognizing, by the control part (21), the transmitting part (22) connected to the control part (21) according to the received trigger signal, and
wherein, after the connection of a transmitting part (22) to the control part (21), the trigger of the transmitting part (22) is connected to the control circuit (211) via a first signal line and a second signal line, and the trigger is used to identify the transmitting part (22) by controlling levels of trigger signals transmitted on the first signal line and the second signal line.

8. The method of claim 7, wherein, after the connection of the control part (21) to the transmitting part (22), the wireless power supplying method further comprises:
receiving, by a phase locked loop of the connected transmitting part (22), the current operating frequency of the transmitting part (22) sampled by a frequency sampling circuit of the transmitting part (22);
comparing, by the phase locked loop, the sampled current operating frequency with a predetermined reference frequency of the transmitting part (22), and if the sampled current operating frequency is not matched with the reference frequency, the phase locked loop notifies the comparison result to the control circuit (211) of the control part (21); and
controlling, by the control circuit (211), the power supply module (212) to adjust the frequency of the sent electrical signal based on the comparison result from the phase locked loop.

9. The method of claim 7, further comprising:
receiving a predetermined reference voltage by a first port of a comparator of the control part (21), and receiving, by a second port of the comparator, the voltage outputted from a voltage conversion circuit (221) of the transmitting part (22) connected to the control part (21);
comparing the voltage at the first port with the voltage at the second port by the comparator; and
determining, by the control circuit (211), whether the control part (21) is connected with the transmitting part (22) based on the comparison result from the comparer, and controlling the power supplying of the power supply module (212).

10. The method of claim 7, wherein, the controlling, by the control circuit (211), the power supply module (212) in the control part (21) to send the electrical signal satisfying the power requirement to the transmitting part (22), and generating the magnetic field based on the electrical signal by the transmitting part (22) to supply power to the load of the receiver, comprises:
controlling, by the control circuit (211), the power supply module (212) in the control part (21) to send the electrical signal satisfying the power requirement to the voltage conversion circuit (221) of the transmitting part (22);
receiving, by the voltage conversion circuit (221), the electrical signal sent by the power supply module (212), performing voltage conversion on the received electrical signal based on the voltage requirement of the transmitting part (22), and providing the converted electrical signal to the coil of the transmitting part (22); and
generating the magnetic field by the coil using the electrical signal converted by the voltage conversion circuit (221), and supplying power to the load of the receiver by means of the magnetic field.

## Patentansprüche

1. Drahtlose Stromversorgungsvorrichtung zur Stromversorgung eines Empfängers, aufweisend eine magnetoelektrische Wandlerfunktion mittels elektromagnetischer Induktion, umfassend: einen Regelteil (21) und mindestens einen Sendeteil (22), der mit dem Regelteil (21) verbunden ist, wobei der Regelteil (21) eine Regelschaltung (211) und ein Stromversorgungsmodul (212) enthält;
wobei die Regelschaltung (211) zum Bestimmen eines Strombedarfs jedes Sendeteils (22), der mit dem Regelteil (21) verbunden ist, und zum Regeln des Stromversorgungsmoduls (212) verwendet wird, damit dieses ein dem Strombedarf entsprechendes elektrisches Signal an den Sendeteil (22) sendet und der Sendeteil (22) wiederum auf der Grundlage des elektrischen Signals ein magnetisches Feld erzeugt und eine Last des Empfängers mit Strom versorgt;
der Regelteil (21) ferner umfassend: ein Speichermodul zum Speichern des Strombedarfs, der jedem Sendeteil (22) entspricht;
wobei die Regelschaltung (211) ferner zum Bestimmen des Strombedarfs des erkannten Sendeteils (22) gemäß der in dem Speichermodul gespeicherten Inhalte verwendet wird;
**dadurch gekennzeichnet, dass**
jeder Sendeteil (22) ferner umfasst: einen Auslöser, der zum Senden eines Auslösesignals verwendet wird, welches den Sendeteil (22), der den Auslöser enthält, gegenüber der Regelschaltung (211) identifiziert, nachdem der Sendeteil (22) mit dem Regelteil (21) verbunden wurde; wobei die Regelschaltung (211) ferner zum Empfangen des Auslösesignals und zum Erkennen des Sendeteils (22), der mit dem Regelteil (21) verbunden ist, entsprechend dem empfangenen Auslösesignal verwendet wird,
wobei, nachdem ein Sendeteil (22) mit dem Regelteil (21) verbunden wurde, der Auslöser des Sendeteils (22) über eine erste Signalleitung und eine zweite Signalleitung mit der Regelschaltung (211) verbunden wird und der Auslöser den Sendeteil (22) durch das Regeln von Pegeln der auf der ersten Signalleitung und der zweiten Signalleitung übertragenen Auslösesignale identifiziert.

2. Vorrichtung nach Anspruch 1, wobei
jeder Sendeteil (22) ferner umfasst: eine Frequenzabtastschaltung zum Abtasten der aktuellen Arbeitsfrequenz des Sendeteils (22), der die Frequenzabtastschaltung enthält, nachdem der Sendeteil (22) mit dem Regelteil (21) verbunden wurde;
wobei eine Phasenregelschleife, die mit der Frequenzabtastschaltung verbunden ist, zum Erfassen der von der Frequenzabtastschaltung abgetasteten Frequenz und zum Vergleichen der erfassten Frequenz mit einer Referenzfrequenz verwendet wird und wobei die Phasenregelschleife das Vergleichsergebnis an den Regelteil (21) übermittelt, wenn die abgetastete Frequenz nicht mit der Referenzfrequenz übereinstimmt;
der Regelteil (21) ferner umfassend: ein Speichermodul zum Speichern eines Arbeitsfrequenzbedarfs, der jedem Sendeteil (22) entspricht;
wobei die Regelschaltung (211) außerdem zum Regeln des Stromversorgungsmoduls (212) verwendet wird, damit dieses die Frequenz des gesendeten elektrischen Signals entsprechend dem von der Phasenregelschleife gelieferten Vergleichsergebnis anpasst.

3. Vorrichtung nach Anspruch 1, ferner umfassend:
einen Komparator, der einen zum Empfangen einer vorgegebenen Referenzspannung verwendeten ersten Anschluss und einen zweiten Anschluss umfasst; wobei die Anzahl der zweiten Anschlüsse gleich der Anzahl der Sendeteile (22) ist, die mit dem Regelteil (21) verbunden werden dürfen, und wobei, wenn ein Sendeteil (22) mit dem Regelteil (21) verbunden ist, der zweite Anschluss eine von einer Spannungswandlerschaltung (221) des Sendeteils (22) ausgegebene Spannung empfängt;
wobei der Komparator zum Vergleichen der Spannung am ersten Anschluss mit der Spannung am zweiten Anschluss und zum Übermitteln des Vergleichsergebnisses an die Regelschaltung (211) verwendet wird, so dass die Regelschaltung (211) entsprechend dem Vergleichsergebnis bestimmt, ob der Regelteil (21) mit dem Sendeteil (22) verbunden ist, und die Stromversorgung des Stromversorgungsmoduls (212) regelt.

4. Vorrichtung nach Anspruch 1, wobei jeder Sendeteil (22) über eine vorgegebene Standardschnittstelle auf eine entfernbare Art mit dem Regelteil (21) verbunden ist.

5. Vorrichtung nach Anspruch 1, wobei jeder Sendeteil (22) umfasst:
eine Spannungswandlerschaltung (221) zum Empfangen des von dem Stromversorgungsmodul (212) gesendeten elektrischen Signals und zum Ausführen einer Spannungswandlung an dem empfangenen elektrischen Signal auf der Grundlage des Spannungsbedarfs der Spule des Sendeteils (22); und
eine Spule zum Erzeugen eines magnetischen Felds unter Verwendung des elektrischen Signals aus der Spannungswandlerschaltung (221) des Sendeteils (22), der die Spule enthält, um die Last des Empfängers mit Strom zu versorgen.

6. Vorrichtung nach Anspruch 5, wobei die Spannungswandlerschaltung (221) in dem Sendeteil (22) eine Inverterschaltung ist.

7. Drahtloses Stromversorgungsverfahren zur Stromversorgung eines Empfängers, aufweisend eine magnetoelektrische Wandlerfunktion mittels elektromagnetischer Induktion, umfassend:
nach dem Verbinden eines Regelteils (21) mit mindestens einem Sendeteil (22), Bestimmen eines Strombedarfs des verbundenen Sendeteils (22) durch eine Regelschaltung (211) des Regelteils (21); und Regeln, durch die Regelschaltung (211), eines Stromversorgungsmoduls (212) in dem Regelteil (21), damit dieses ein dem Strombedarf entsprechendes elektrisches Signal an den Sendeteil (22) sendet, welcher auf der Grundlage des elektrischen Signals ein magnetisches Feld erzeugt, um eine Last des Empfängers mit Strom zu versorgen;
wobei der Strombedarf des erkannten Sendeteils (22) gemäß der in einem Speichermodul des Regelteils (21) gespeicherten Inhalte bestimmt wird, wobei das Speichermodul zum Speichern des Strombedarfs, der jedem Sendeteil (22) entspricht, verwendet wird,
**dadurch gekennzeichnet, dass**
das Bestimmen des Strombedarfs der verbundenen Sendeteils (22) durch die Regelschaltung (211) umfasst:
Empfangen, durch die Regelschaltung (211), eines Auslösesignals zum Identifizieren des Sendeteils (22), das durch einen Auslöser des Sendeteils (22) gesendet wird; und
Erkennen, durch den Regelteil (21), des Sendeteils (22), der mit dem Regelteil (21) verbunden ist, entsprechend dem empfangenen Auslösesignal, und
wobei, nach der Verbindung eines Sendeteils (22) mit dem Regelteil (21), der Auslöser des Sendeteils (22) über eine erste Signalleitung und eine zweite Signalleitung mit der Regelschaltung (211) verbunden wird und der Auslöser dazu verwendet wird, den Sendeteil (22) durch das Regeln von Pegeln von auf der ersten Signalleitung und der zweiten Signalleitung übertragenen Auslösesignalen zu identifizieren.

8. Verfahren nach Anspruch 7, wobei nach der Verbindung des Regelteils (21) mit dem Sendeteil (22) das drahtlose Stromversorgungsverfahren ferner umfasst:
Empfangen, durch eine Phasenregelschleife des verbundenen Sendeteils (22), der aktuellen Arbeitsfrequenz des Sendeteils (22), die von einer Frequenzabtastschaltung des Sendeteils (22) abgetastet wurde;
Vergleichen, durch die Phasenregelschleife, der abgetasteten aktuellen Arbeitsfrequenz mit einer vorgegebenen Referenzfrequenz des Sendeteils (22), wobei die Phasenregelschleife das Vergleichsergebnis an die Regelschaltung (211) des Regelteils (21) übermittelt, wenn die abgetastete aktuelle Arbeitsfrequenz nicht mit der Referenzfrequenz übereinstimmt; und
Regeln, durch die Regelschaltung (211), des Stromversorgungsmoduls (212), damit dieses die Frequenz des gesendeten elektrischen Signals entsprechend dem von der Phasenregelschleife gelieferten Vergleichsergebnis anpasst.

9. Verfahren nach Anspruch 7, ferner umfassend:
Empfangen einer vorgegebenen Referenzspannung durch einen ersten Anschluss eines Komparators des Regelteils (21) und Empfangen, durch einen zweiten Anschluss des Komparators, der von einer Spannungswandlerschaltung (221) des mit dem Regelteil (21) verbundenen Sendeteils (22) ausgegebenen Spannung;
Vergleichen der Spannung am ersten Anschluss mit der Spannung am zweiten Anschluss durch den Komparator; und
Bestimmen, durch die Regelschaltung (211), auf der Grundlage des Vergleichsergebnisses aus dem Komparator, ob der Regelteil (21) mit dem Sendeteil (22) verbunden ist, und Regeln der Stromversorgung des Stromversorgungsmoduls (212).

10. Verfahren nach Anspruch 7, wobei das Regeln, durch die Regelschaltung (211), des Stromversorgungsmoduls (212) in dem Regelteil (21), damit dieses das dem Strombedarf entsprechende elektrische Signal an den Sendeteil (22) sendet, und das Erzeugen des magnetischen Felds auf der Grundlage des elektrischen Signals durch den Sendeteil (22), um eine Last des Empfängers mit Strom zu versorgen, umfasst:
Regeln, durch die Regelschaltung (211), des Stromversorgungsmoduls (212) in dem Regelteil (21), damit dieses das dem Strombedarf entsprechende elektrische Signal an die Spannungswandlerschaltung (221) des Sendeteils (22) sendet;
Empfangen, durch die Spannungswandlerschaltung (221), des von dem Stromversorgungsmodul (212) gesendeten elektrischen Signals, Ausführen einer Spannungswandlung an dem empfangenen elektrischen Signal auf der Grundlage des Spannungsbedarfs des Sendeteils (22), und Liefern des gewandelten elektrischen Signals an die Spule des Sendeteils (22); und
Erzeugen des magnetischen Felds durch die Spule unter Verwendung des von der Spannungswandlerschaltung (221) gewandelten elektrischen Signals und Versorgen der Last des Empfängers mit Strom mittels des magnetischen Felds.

## Revendications

1. Dispositif d'alimentation électrique sans fil pour alimenter en électricité un récepteur ayant une fonction de conversion magnéto-électrique au moyen de l'induction électromagnétique, comprenant une partie de commande (21) et au moins une partie de transmission (22) connectée à la partie de commande (21), la partie de commande (21) incluant un circuit de commande (211) et un module d'alimentation électrique (212) ;
le circuit de commande (211) étant utilisé pour déterminer un besoin en électricité de chaque partie de transmission (22) connectée à la partie de commande (21) et pour commander le module d'alimentation électrique (212) pour envoyer à la partie de transmission (22) un signal électrique satisfaisant aux besoins en électricité, et la partie de transmission (22) générant à son tour un champ magnétique basé sur le signal électrique et alimentant en électricité une charge du récepteur ;
la partie de commande (21) comprenant en outre : un module de stockage pour stocker les besoins en électricité correspondant à chaque partie de transmission (22) ;
le circuit de commande (211) étant en outre utilisé pour déterminer les besoins en électricité de la partie de transmission (22) reconnue conformément aux contenus stockés dans le module de stockage ;
**caractérisé en ce que**
chaque partie de transmission (22) comprend en outre : un déclencheur, lequel est utilisé pour envoyer au circuit de commande (211) un signal de déclenchement identifiant la partie de transmission (22) incluant le déclencheur, après que la partie de transmission (22) est connectée à la partie de commande (21) ; le circuit de commande (211) étant en outre utilisé pour recevoir le signal de déclenchement et pour reconnaître la partie de transmission (22) connectée à la partie de commande (21) conformément au signal de déclenchement reçu,
après que la partie de transmission (22) est connectée à la partie de commande (21), le déclencheur de la partie de transmission (22) est connectée au circuit de commande (211) via une première ligne de signaux et une deuxième ligne de signaux, et le déclencheur identifie la partie de transmission (22) en contrôlant les niveaux des signaux de déclenchement transmis sur la première ligne de signaux et la deuxième ligne de signaux.

2. Dispositif selon la revendication 1,
chaque partie de commande (22) comprenant en outre : un circuit d'échantillonnage de fréquence pour échantillonner la fréquence de fonctionnement actuelle de la partie de transmission (22) incluant le circuit d'échantillonnage de fréquence après que la partie de transmission (22) est connectée à la partie de commande (21) ;
une boucle à asservissement de phase, laquelle est connectée au circuit d'échantillonnage de fréquence, est utilisée pour obtenir la fréquence échantillonnée par le circuit d'échantillonnage de fréquence, et pour comparer la fréquence obtenue à une fréquence de référence, et si la fréquence échantillonnée ne correspond pas à la fréquence de référence, la boucle à asservissement de phase communique le résultat de comparaison à la partie de commande (21) ;
la partie de commande (21) comprenant en outre : un module de stockage pour stocker des besoins en fréquence de fonctionnement correspondant à chaque partie de transmission (22) ;
le circuit de commande (211) étant également utilisé pour commander le module d'alimentation électrique (212) pour ajuster la fréquence du signal électrique envoyé conformément au résultat de comparaison de la boucle d'asservissement de phase.

3. Dispositif selon la revendication 1, comprenant en outre :
un comparateur comprenant un premier port utilisé pour recevoir une tension de référence prédéterminée et un deuxième port ; le nombre des deuxièmes ports étant le même que celui des parties de transmission (22) autorisées à être connectées à la partie de commande (21) et, au cas où une partie de transmission (22) est connectée à la partie de commande (21), le deuxième port recevant une tension délivrée par un circuit de conversion de tension (221) de la partie de transmission (22) ;
le comparateur étant utilisé pour comparer la tension au niveau du premier port à la tension au niveau du deuxième port, et pour communiquer le résultat de comparaison au circuit de commande (211), de telle sorte que le circuit de commande (211) détermine si la partie de commande (21) est connectée à la partie de transmission (22) conformément au résultat de comparaison, et pour commander l'alimentation en électricité du module d'alimentation électrique (212).

4. Dispositif selon la revendication 1, chaque partie de transmission (22) étant connectée à la partie de commande (21) d'une manière amovible par une interface standard prédéterminée.

5. Dispositif selon la revendication 1, chaque partie de transmission (22) comprenant :
un circuit de conversion de tension (221) pour recevoir le signal électrique envoyé par le module d'alimentation électrique (212) et pour exécuter une conversion de tension sur le signal électrique reçu basé sur le besoin en tension de la bobine de la partie de transmission (22) ; et
une bobine pour générer un champ magnétique en utilisant le signal électrique du circuit de conversion de tension (221) de la partie de transmission (22) incluant la bobine, pour alimenter en électricité la charge du récepteur.

6. Dispositif selon la revendication 5, le circuit de conversion de tension (221) dans la partie de transmission (221) étant un circuit inverseur.

7. Procédé d'alimentation électrique sans fil pour alimenter en électricité un récepteur ayant une fonction de conversion magnéto-électrique au moyen de l'induction électromagnétique, comprenant :
déterminer un besoin en électricité de la partie de transmission (22) connectée par un circuit de commande (211) de la partie de commande (21), après la connexion d'une partie de commande (21) à au moins une partie de transmission (22) ; et
commander, par le circuit de commande (211), un module d'alimentation électrique (212) dans la partie de commande (21) pour envoyer un signal électrique satisfaisant aux besoins en électricité de la partie de transmission (22), laquelle génère un champ magnétique sur la base du signal électrique pour alimenter en électricité une charge du récepteur ;
les besoins en électricité de la partie de transmission (22) reconnue étant déterminés conformément à des contenus stockés dans un module de stockage de la partie de commande (21), le module de stockage étant utilisé pour stocker des besoins en électricité correspondant à chaque partie de transmission (22),
**caractérisée en ce que**
la détermination des besoins en électricité de la partie de transmission (22) connectée par le circuit de commande (211) comprend :
recevoir, par le circuit de commande (211), un signal de déclenchement pour identifier la partie de transmission (22) envoyé par un déclencheur de la partie de transmission (22) ; et
reconnaître, à l'aide de la partie de commande (21), la partie de transmission (22) connectée à la partie de commande (21) conformément au signal de déclenchement reçu, et,
après la connexion d'une partie de transmission (22) à la partie de commande (21), le déclencheur de la partie de transmission (22) étant connecté au circuit de commande (211) via une première ligne de signaux et une deuxième ligne de signaux, et le déclencheur étant utilisé pour identifier la partie de transmission (22) en contrôlant les niveaux des signaux de déclenchement transmis sur la première ligne de signaux et la deuxième ligne de signaux.

8. Procédé selon la revendication 7, le procédé d'alimentation électrique sans fil comprenant en outre, après la connexion de la partie de commande (21) à la partie de transmission (22) :
recevoir, par une boucle d'asservissement de phase de la partie de transmission (22) connectée, la fréquence de fonctionnement actuelle de la partie de transmission (22) échantillonnée par un circuit d'échantillonnage de fréquence de la partie de transmission (22) ;
comparer, à l'aide de la boucle d'asservissement de phase, la fréquence de fonctionnement actuelle échantillonnée à une fréquence de référence prédéterminée de la partie de transmission (22), et si la fréquence de fonctionnement actuelle échantillonnée ne correspond pas à la fréquence de référence, la boucle d'asservissement de phase communique le résultat de comparaison au circuit de commande (211) de la partie de commande (21) ; et
commander, à l'aide du circuit de commande (211), le module d'alimentation électrique (212) pour ajuster la fréquence du signal électrique envoyé sur la base du résultat de comparaison de la boucle d'asservissement de phase.

9. Procédé selon la revendication 7, comprenant en outre :
recevoir une tension de référence prédéterminée par un premier port d'un comparateur de la partie de commande (21), et recevoir, par un deuxième port du comparateur, la tension délivrée par un circuit de conversion de tension (221) de la partie de transmission (22) connectée à la partie de commande (21) ;
comparer, à l'aide du comparateur, la tension au niveau du premier port à la tension au niveau du deuxième port ; et
déterminer, à l'aide du circuit de commande (211), si la partie de commande (21) est connectée à la partie de transmission (22) sur la base du résultat de comparaison du comparateur, et commander l'alimentation en électricité du module d'alimentation électrique (212).

10. Procédé selon la revendication 7, la commande, à l'aide du circuit de commande (211), du module d'alimentation électrique (212) dans le partie de commande (21) pour envoyer le signal électrique satisfaisant aux besoins en électricité de la partie de transmission (22), et générer le champ magnétique, sur la base du signal électrique, par la partie de transmission (22) pour alimenter en électricité la charge du récepteur, comprenant :
commander, à l'aide du circuit de commande (211), le module d'alimentation électrique (212) dans la partie de commande (21) pour envoyer un signal électrique satisfaisant aux besoins en électricité au circuit de conversion de tension (221) de la partie de transmission (22) ;
recevoir, par le circuit de conversion de tension (221), le signal électrique envoyé par le module d'alimentation électrique (212), exécuter une conversion de tension sur le signal électrique reçu sur la base du besoin en tension de la partie de transmission (22), et fournir le signal électrique converti à la bobine de la partie de transmission (22) ; et
générer le champ magnétique à l'aide de la bobine en utilisant le signal électrique converti par le circuit de conversion de tension (221), et alimenter en électricité de la charge du récepteur au moyen du champ magnétique.
